# FASCICULE DE BREVET EUROPEEN

(11) **EP 3 965 256 B1**
(45) Date de publication et mention de la délivrance du brevet: **23.08.2023**
(21) Numéro de dépôt: 21194601.7
(22) Date de dépôt: 02.09.2021
(51) Int. Cl.: H02J 7/00

(54) **SYSTÈME DE PROTECTION D'UNE BATTERIE D'UN VÉHICULE**
SCHUTZSYSTEM FÜR EINE BATTERIE EINES FAHRZEUGS
SYSTEM FOR PROTECTING A BATTERY OF A VEHICLE

(30) Priorité: 03.09.2020 FR 2008942
(43) Date de publication de la demande: 09.03.2022
(73) Titulaire: ALSTOM Transport Technologies, 93400 Saint-Ouen (FR)
(72) Inventeur: BELLOMO, Jean-Philippe, 65000 TARBES (FR); ABOUJDID, Eric, 65420 IBOS (FR)
(74) Mandataire: Lavoix

(56) Documents cités:
- US-A1- 2017 310 112
- US-A1- 2018 029 486
- US-A1- 2019 263 279

## Description

La présente invention concerne un système de protection d'une batterie de véhicule destinée à stocker de l'énergie provenant d'un réseau via une voie de charge ou à fournir de l'énergie au réseau via une voie de décharge, le système comprenant au moins un convertisseur de courant, au moins un premier contacteur d'isolement du convertisseur disposé entre la voie de charge ou/et la voie de décharge et le convertisseur en amont du convertisseur et au moins un module externe de protection de la batterie indépendant du convertisseur, disposé en aval du convertisseur,
la batterie étant reliée électriquement au convertisseur, le convertisseur étant relié électriquement au réseau via la voie de charge et la voie de décharge,
le premier contacteur d'isolement étant propre à connecter ou à déconnecter le convertisseur au réseau en amont du convertisseur par rapport à la batterie, chaque module externe de protection de la batterie comprenant :
   - un système de mesure externe de la tension aux bornes de la batterie, et
   - un module de contrôle configuré pour recevoir la valeur de la tension mesurée par le système de mesure externe et étant configuré pour isoler la batterie par rapport au réseau lorsqu'une sous-tension inférieure à une tension minimale de référence prédéterminée est mesurée par le système de mesure externe ou lorsqu'une surtension supérieure à une tension maximale de référence prédéterminée est mesurée par le système de mesure externe.

Le véhicule est notamment un véhicule ferroviaire, tel qu'un train ou un tramway ou en variante, un véhicule terrestre, notamment un autobus.

Un tel système permet d'ajouter un niveau de protection permettant d'assurer l'intégrité de la batterie et la sécurité du véhicule. En effet, une forte surcharge ou surdécharge des cellules de la batterie peut provoquer, par exemple, un incendie, un dégagement de produits volatiles toxiques ou inflammables mettant en péril notamment la sécurité des passagers du véhicule. Le document US 2018/029486 divulgue un système de gestion de batterie comportant un dispositif de protection.

Dans le domaine des transports, les véhicules, notamment ferroviaires, doivent stocker et délivrer une quantité importante d'énergie électrique lorsque l'énergie électrique est stockée dans des batteries. Cela implique que ces véhicules comprennent un grand nombre de batteries, chaque batterie pouvant être soumise à de fortes variations de tension. Dans ce cas, les probabilités qu'une batterie soit endommagée deviennent significatives. Il est donc nécessaire de munir les batteries d'un système de protection.

Les protections utilisées contre ces avaries doivent atteindre un niveau de fiabilité élevé. Pour les applications, par exemple, dans le domaine des transports, on cherche à obtenir un taux d'occurrence des pannes inférieur à 10⁻⁹ par heure.

De manière générale, la protection de la batterie et l'atteinte de ce faible taux d'occurrence repose sur un module de gestion de la batterie intégrée à la batterie. Cependant, on remarque que le module de gestion de la batterie seul n'est que rarement capable de respecter une telle contrainte.

Un but de l'invention est de fournir un système de protection permettant d'atteindre un très faible taux d'occurrence des pannes, simple à mettre en oeuvre et qui présente un coût d'implémentation faible.

A cet effet, l'invention concerne un système de protection d'une batterie de véhicule du type précité, dans lequel le module de contrôle isole la batterie en ouvrant le premier contacteur d'isolement du convertisseur lorsqu'une surtension ou une sous-tension est mesurée par le système de mesure externe de la tension.

Ainsi, le module externe utilise un contacteur déjà présent dans l'architecture de la batterie préexistante. Un tel système de protection vient donc s'implémenter de manière simple sur l'architecture de batterie. Il constitue, en outre, une protection supplémentaire permettant d'atteindre un haut niveau de sécurité.

En cas d'avarie, l'ouverture du premier contacteur d'isolement permet d'isoler la batterie et le convertisseur par rapport au réseau et évite, par exemple, qu'un court-circuit dans le convertisseur n'entraîne l'ouverture d'un disjoncteur principal du véhicule et la perte totale de traction.

L'ouverture du premier contacteur d'isolement permet également de protéger la batterie et le convertisseur d'une surtension au niveau du réseau.

Le système de protection peut comprendre l'une ou plusieurs des caractéristiques suivantes, prises isolément ou selon toute combinaison techniquement envisageable :
- le premier contacteur d'isolement du convertisseur est propre à connecter ou à déconnecter le convertisseur au réseau en autorisant ou en empêchant la circulation du courant respectivement dans la voie de charge et/ou dans la voie de décharge en amont du convertisseur par rapport à la batterie,
- lorsque la tension mesurée par le système de mesure externe est inférieure à la tension minimale de référence, le module de contrôle commande le premier contacteur d'isolement pour empêcher le courant de circuler dans la voie de décharge et lorsque la tension mesurée par le système de mesure externe est supérieure à la tension maximale de référence, le module de contrôle commande le premier contacteur d'isolement pour empêcher le courant de circuler dans la voie de charge,

- le convertisseur comprend un premier système de mesure de tension aux bornes de la batterie et un premier dispositif de contrôle propre à ouvrir le premier contacteur d'isolement du convertisseur lorsqu'une surtension ou une sous-tension est mesurée par le premier système de mesure,
- le premier dispositif de contrôle est propre à tester le module externe en envoyant au module de contrôle au moins une valeur de test de surtension ou de sous-tension ou une valeur de test de tension nominale comprise entre la tension minimale de référence et la tension maximale de référence,
- le système comprend un module de gestion de la batterie et un deuxième contacteur d'isolement de la batterie propre à connecter la batterie au convertisseur ou à déconnecter la batterie du convertisseur, le module de gestion comprenant un deuxième système de mesure de la tension aux bornes de la batterie, le module de gestion de la batterie étant configuré pour ouvrir le deuxième contacteur d'isolement de la batterie lorsqu'une surtension ou une sous-tension est mesurée par le deuxième système de mesure,
- le module de contrôle est propre à ouvrir le deuxième contacteur d'isolement, lorsqu'une surtension ou une sous-tension est mesurée par le système de mesure externe.

L'invention concerne également un véhicule, notamment véhicule ferroviaire, véhicule routier ou de transport en commun, comprenant :
- au moins une batterie,
- au moins un système tel que décrit ci-dessus,
- au moins un réseau propre à raccorder la batterie à des utilités via la voie de décharge et la batterie à un système de recharge via la voie de charge.

L'invention concerne en outre un procédé de protection d'une batterie de véhicule par un système de protection tel que décrit ci-dessus, comprenant les étapes suivantes :
- mesure de la tension aux bornes de la batterie par le système de mesure externe de la tension,
- réception par le module de contrôle de la valeur de la tension mesurée par le système de mesure externe,
- ouverture du premier contacteur d'isolement du convertisseur par le module de contrôle lorsque la valeur de la tension mesurée est inférieure à une tension minimale de référence prédéterminée ou lorsque la tension mesurée est supérieure à une tension maximale de référence prédéterminée.

Le procédé peut comprendre la caractéristique suivante, prise isolément ou selon toute combinaison techniquement envisageable avec les caractéristiques ci-dessus :
- le premier dispositif de contrôle du convertisseur teste le module externe périodiquement en :
- envoyant successivement au module de contrôle, une valeur de test de surtension, une valeur de test de sous-tension et une valeur de test de tension nominale comprise entre une tension minimale de référence et une tension maximale de référence,
- émettant un signal d'erreur lorsque le premier contacteur d'isolement reste ouvert malgré l'envoi de la valeur de test de tension nominale,
- émettant un signal d'erreur lorsque le premier contacteur d'isolement reste fermé malgré l'envoi de la valeur de test de sous-tension ou de surtension.

D'autres aspects et avantages de l'invention apparaîtront à la lecture de la description qui suit, donnée à titre d'exemple et faite en référence aux dessins annexés, dans lesquels :
- La Figure 1 est une représentation schématique d'un système de protection d'une batterie selon l'invention, dans une architecture électrique d'un véhicule ;
- La Figure 2 est une représentation schématique détaillée de l'encadré II du système de protection de la Figure 1.

Dans ce qui suit, les termes « amont » et « aval » sont définis par rapport à la direction de propagation du courant électrique lors du chargement de la batterie, la batterie étant l'élément le plus en aval du système.

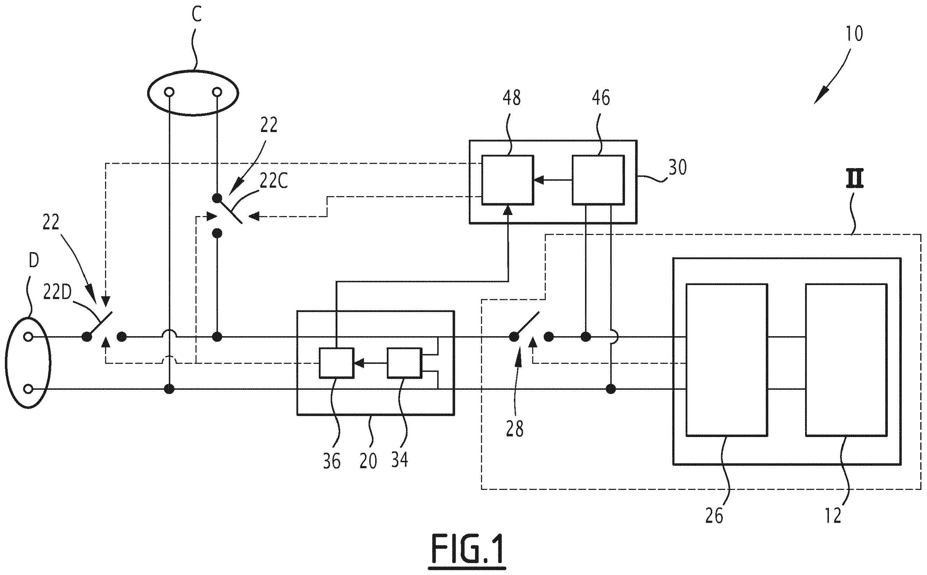

En référence à la Figure 1, on décrit un système 10 de protection d'une batterie 12 de véhicule.

La batterie 12 appartient, par exemple, à un véhicule ferroviaire tel qu'un train ou un tramway. La batterie 12 peut également appartenir à un véhicule routier, un véhicule maritime ou tout autre type de véhicule.

La batterie 12 est destinée à stocker de l'énergie provenant d'un réseau via une voie de charge C ou à fournir de l'énergie au réseau via une voie de décharge D. La batterie 12 est, par exemple, une batterie lithium-ion.

La voie de charge C est, par exemple, connectée à un système de recharge tel qu'un générateur de courant. La voie de charge C est, en outre, par exemple, connectée à un réseau de caténaire lorsque la batterie 12 appartient à un véhicule ferroviaire électrique. La voie de décharge D est, par exemple, connectée à des utilités tels qu'un ensemble d'éléments électroniques du véhicule, lesdits éléments électroniques étant configurés pour recevoir de l'énergie électrique depuis la batterie 12. La voie de décharge D est, par exemple, raccordé à un moteur électrique D de traction du véhicule.

Le système 10 comprend au moins un convertisseur 20 de courant, au moins un premier contacteur d'isolement 22 du convertisseur 20, au moins un module de gestion 26 de la batterie 12, au moins un deuxième contacteur d'isolement 28 de la batterie 12 et au moins un module externe 30 de protection de la batterie 12.

Le convertisseur 20 est électriquement relié à la batterie 12 et est électriquement relié au réseau via la voie de charge C et la voie de décharge D.

Le convertisseur 20 de courant est configuré pour convertir la puissance électrique de charge provenant de la voie de charge C et circulant vers la batterie 12 et convertir la puissance électrique de décharge provenant de la batterie 12 et circulant vers la voie de décharge D.

Par exemple, le convertisseur 20 est un convertisseur de tension permettant d'adapter la tension du courant de charge pour l'adapter à la tension nominale de charge de la batterie 12 et permettant d'adapter la tension du courant de décharge pour l'adapter à la tension nominale de décharge dans la voie de décharge D.

Le convertisseur 20 comprend un premier système de mesure 34 de tension et un premier dispositif de contrôle 36.

Le premier système de mesure 34 de la tension est configuré pour mesurer la tension aux bornes de la batterie 12. Le premier système de mesure 34 est, par exemple, un voltmètre branché aux bornes de la batterie 12.

Le premier dispositif de contrôle 36 est, par exemple, un premier microprocesseur.

Le premier dispositif de contrôle 36 est connecté au premier système de mesure 34. Le premier dispositif de contrôle 36 est configuré pour recevoir la valeur de la tension mesurée par le premier système de mesure 34.

Le premier contacteur d'isolement 22 du convertisseur 20 est propre à connecter ou à déconnecter le convertisseur 20 au réseau en amont du convertisseur 20.

Selon le mode de réalisation illustré sur la Figure 1, le premier contacteur d'isolement 22 du convertisseur 20 comprend un premier contacteur d'isolement de charge 22C et un premier contacteur d'isolement de décharge 22D.

Le premier contacteur d'isolement de charge 22C du convertisseur 20 est propre à connecter ou à déconnecter le convertisseur 20 au réseau en amont du convertisseur via la voie de charge C en autorisant ou en empêchant la circulation du courant entre la voie de charge C et le convertisseur 20.

Le premier contacteur d'isolement de charge 22C est fermé et donc autorise la circulation du courant entre la voie de charge C et le convertisseur 20 lorsqu'il est alimenté en courant. Le premier contacteur d'isolement de charge 22C est ouvert et donc empêche la circulation du courant entre la voie de charge C et le convertisseur 20 dans le cas contraire.

Le premier contacteur d'isolement de décharge 22D du convertisseur 20 est propre à connecter ou à déconnecter le convertisseur 20 au réseau en amont du convertisseur via la voie de décharge D en autorisant ou en empêchant la circulation du courant entre la voie de charge D et le convertisseur 20.

Le premier contacteur d'isolement de décharge 22D est fermé et donc autorise la circulation du courant entre la voie de décharge D et le convertisseur 20 lorsqu'il est alimenté en courant. Le premier contacteur d'isolement de décharge 22D est ouvert et donc empêche la circulation du courant entre la voie de décharge D et le convertisseur 20 dans le cas contraire.

Le premier dispositif de contrôle 36 est connecté au premier contacteur d'isolement 22 et est configuré pour contrôler le premier contacteur d'isolement 22 entre une position fermée dans laquelle le premier contacteur d'isolement 22 connecte le convertisseur 20 au réseau et une position ouverte dans laquelle le premier contacteur d'isolement 22 déconnecte le convertisseur 20 du réseau.

Le premier dispositif de contrôle 36 est, en outre, configuré pour isoler la batterie 12 par rapport au réseau lorsqu'une sous-tension inférieure à une tension minimale de référence Vₘᵢₙ prédéterminée est mesurée par le premier système de mesure 34 ou lorsqu'une surtension supérieure à une tension maximale de référence Vₘₐₓ prédéterminée est mesurée par le premier système de mesure 34.

Lorsqu'une sous-tension inférieure à une tension minimale de référence Vₘᵢₙ prédéterminée est mesurée par le premier système de mesure 34, le premier dispositif de contrôle 36 coupe l'alimentation du premier contacteur d'isolement de décharge 22D.

Lorsqu'une surtension supérieure à une tension maximale de référence Vₘₐₓ prédéterminée est mesurée par le premier système de mesure 34, le premier dispositif de contrôle 36 coupe l'alimentation du premier contacteur d'isolement de charge 22C.

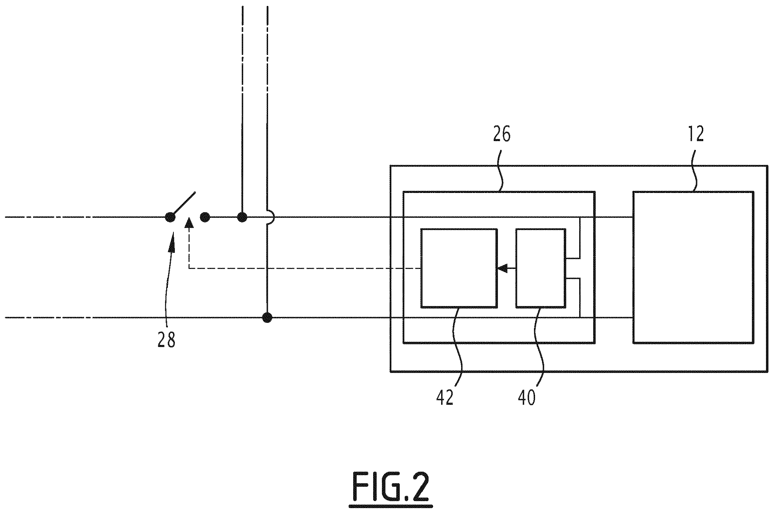

En référence à la Figure 2, le module de gestion 26 de la batterie 12 est relié électriquement à la batterie 12 et au convertisseur 20 et comprend un deuxième système de mesure 40 de la tension et un deuxième dispositif de contrôle 42.

Le deuxième système de mesure 40 de la tension est configuré pour mesurer la tension aux bornes de la batterie 12. Le deuxième système de mesure 40 est, par exemple, un voltmètre branché aux bornes de la batterie 12.

Le deuxième dispositif de contrôle 42 est, par exemple, un deuxième microprocesseur.

Le deuxième dispositif de contrôle 42 est connecté au deuxième système de mesure 40. Le deuxième dispositif de contrôle 42 est configuré pour recevoir la valeur de la tension mesurée par le deuxième système de mesure 40.

Le deuxième contacteur d'isolement 28 de la batterie 12 est propre à connecter ou à déconnecter la batterie 12 au réseau en amont du module de gestion 26 de la batterie 12.

Le deuxième contacteur d'isolement 28 de la batterie 12 est propre à connecter ou à déconnecter la batterie 12 au réseau en amont du module de gestion 26 de la batterie 12 en autorisant ou en empêchant la circulation du courant entre le convertisseur 20 et le module de gestion 26 de la batterie 12.

Le deuxième contacteur d'isolement 28 est fermé et donc autorise la circulation du courant entre le convertisseur 20 et le module de gestion 26 lorsqu'il est alimenté en courant. Le deuxième contacteur d'isolement 28 est ouvert et donc empêche la circulation du courant entre le convertisseur 20 et le module de gestion 26 dans le cas contraire.

Le deuxième dispositif de contrôle 42 est connecté au deuxième contacteur d'isolement 28 et est configuré pour contrôler le deuxième contacteur d'isolement 28 entre une position fermée dans laquelle le deuxième contacteur d'isolement 28 connecte la batterie 12 au réseau et une position ouverte dans laquelle le deuxième contacteur d'isolement 28 déconnecte le la batterie 12 du réseau.

Le deuxième dispositif de contrôle 42 est, en outre, configuré pour isoler la batterie 12 par rapport au réseau en coupant l'alimentation du deuxième contacteur d'isolement 28 lorsqu'une sous-tension inférieure à une tension minimale de référence Vₘᵢₙ prédéterminée est mesurée par le deuxième système de mesure 40 ou lorsqu'une surtension supérieure à une tension maximale de référence Vₘₐₓ prédéterminée est mesurée par le deuxième système de mesure 40.

En référence à la Figure 1, le module externe 30 de protection de la batterie 12 est un module externe qui vient se connecter de manière simple aux éléments décrits précédemment.

Le module externe 30 comprend un système de mesure externe 46 de la tension et un module de contrôle 48.

Le système de mesure externe 46 de la tension est configuré pour mesurer la tension aux bornes de la batterie 12. Le système de mesure 46 est, par exemple, un voltmètre branché aux bornes de la batterie 12.

Selon le mode de réalisation illustré sur la Figure 1, le système de mesure externe 46 est branché aux bornes de la batterie 12 en amont du module de gestion 26 de la batterie 12 et en aval du convertisseur 20.

Le module de contrôle 48 est, par exemple, une carte électronique.

Le module de contrôle 48 est connecté au premier contacteur d'isolement 22 et est configuré pour contrôler le premier contacteur d'isolement 22 entre une position fermée dans laquelle le premier contacteur d'isolement 22 connecte le convertisseur 20 au réseau et une position ouverte dans laquelle le premier contacteur d'isolement 22 déconnecte le convertisseur 20 du réseau.

Le module de contrôle 48 est, en outre, configuré pour isoler la batterie 12 par rapport au réseau lorsqu'une sous-tension inférieure à une tension minimale de référence Vₘᵢₙ prédéterminée est mesurée par le système de mesure externe 46 ou lorsqu'une surtension supérieure à une tension maximale de référence Vₘₐₓ prédéterminée est mesurée par le système de mesure externe 46.

Lorsqu'une sous-tension inférieure à une tension minimale de référence Vₘᵢₙ prédéterminée est mesurée par le système de mesure externe 46, le module de contrôle 48 coupe l'alimentation du premier contacteur d'isolement de décharge 22D.

Lorsqu'une surtension supérieure à une tension maximale de référence Vₘₐₓ prédéterminée est mesurée par le système de mesure externe 46, le module de contrôle 48 coupe l'alimentation du premier contacteur d'isolement de charge 22C.

Le module de contrôle 48 du module externe 30 est, en outre, configuré pour être testé périodiquement par le premier dispositif de contrôle 36 du convertisseur 20. Le module de contrôle 48 est configuré pour recevoir périodiquement une valeur de test de tension nominale comprise entre une tension minimale de référence Vₘᵢₙ et une tension maximale de référence Vₘₐₓ, une valeur de test de surtension et une valeur de test de sous-tension générées par le premier dispositif de contrôle 36 du convertisseur 20.

Le premier dispositif de contrôle 36 est donc configuré pour, périodiquement, générer successivement une valeur de test de surtension, une valeur de test de sous-tension et une valeur de test de tension nominale et envoyer ces valeurs de test au module de contrôle 48.

Le premier dispositif de contrôle 36 est configuré pour vérifier la fermeture du premier contacteur d'isolement 22 suite à l'envoi de la valeur de test de tension nominale et émettre un signal d'erreur lorsque le premier contacteur d'isolement 22 reste ouvert malgré l'envoi de la valeur de test de tension nominale.

Le premier dispositif de contrôle 36 est en outre configuré pour vérifier l'ouverture du premier contacteur d'isolement 22 suite à l'envoi de la valeur de test de sous-tension ou de surtension et émettre un signal d'erreur lorsque le premier contacteur d'isolement 22 reste fermé malgré l'envoi de la valeur de test de sous-tension ou de surtension.

Un procédé de protection d'une batterie 12 de véhicule par un système 10 tel que décrit précédemment est décrit dans ce qui suit.

Le convertisseur 20 et le module de gestion 26 de la batterie 12 sont des composants de protection permanents de la batterie 12.

Lorsque la batterie 12 est connectée au réseau via la voie de charge C et la voie de décharge D, le premier dispositif de contrôle 36 reçoit la valeur de la tension mesurée par le premier système de mesure 34.

Lorsque le premier dispositif de contrôle 36 du convertisseur 20 reçoit une valeur de tension mesurée inférieure à une tension minimale de référence Vₘᵢₙ prédéterminée, le premier dispositif de contrôle 36 coupe l'alimentation du premier contacteur d'isolement de décharge 22D ce qui ouvre le premier contacteur d'isolement de décharge 22D et isole le convertisseur 20 et la batterie 12 de la voie de décharge D.

Lorsque le premier dispositif de contrôle 36 du convertisseur 20 reçoit une valeur de tension mesurée supérieure à une tension maximale de référence Vₘₐₓ prédéterminée, le premier dispositif de contrôle 36 coupe l'alimentation du premier contacteur d'isolement de charge 22C ce qui ouvre le premier contacteur d'isolement de charge 22C et isole le convertisseur 20 et la batterie 12 de la voie de charge C.

En outre, lorsque la batterie 12 est connectée au réseau, le deuxième dispositif de contrôle 42 reçoit la valeur de la tension mesurée par le deuxième système de mesure 40.

Lorsque le deuxième dispositif de contrôle 42 du module de gestion 26 reçoit une valeur de tension mesurée inférieure à une tension minimale de référence Vₘᵢₙ prédéterminée ou supérieur à une tension maximale de référence Vₘₐₓ, le deuxième dispositif de contrôle 42 coupe l'alimentation du deuxième contacteur d'isolement 28 ce qui ouvre le deuxième contacteur d'isolement 28 et isole la batterie 12 du réseau. Ceci assure une protection redondante à celle assurée par le convertisseur 20.

En outre, lorsque la batterie 12 est connectée au réseau, le module de contrôle 48 du module externe 30 reçoit la valeur de la tension mesurée par le système de mesure externe 46 de la tension.

Lorsque le module de contrôle 48 reçoit une valeur de tension mesurée inférieure à une tension minimale de référence Vₘᵢₙ prédéterminée, le module de contrôle 48 coupe l'alimentation du premier contacteur d'isolement de décharge 22D ce qui ouvre le premier contacteur d'isolement de décharge 22D et isole le convertisseur 20 et la batterie 12 de la voie de décharge D.

Lorsque le module de contrôle 48 du convertisseur 20 reçoit une valeur de tension mesurée supérieure à une tension maximale de référence Vₘₐₓ prédéterminée, le module de contrôle 48 coupe l'alimentation du premier contacteur d'isolement de charge 22C ce qui ouvre le premier contacteur d'isolement de charge 22C et isole le convertisseur 20 et la batterie 12 de la voie de charge C.

Ainsi, même en cas de défaillance de la protection assurée par le convertisseur 20 et de celle assurée par le module de gestion 26, la protection est assurée par le module externe 30. Le module externe 30 est monté entre le convertisseur 20 et le module de gestion 26 de manière indépendante en termes de mesure de tension, et de commande du premier contacteur d'isolement 22 et en parallèle de chacun d'eux.

Périodiquement, le premier dispositif de contrôle 36 du convertisseur 20 teste le module de contrôle 48 du module externe 30. Le premier dispositif de contrôle 36 envoie successivement au module de contrôle 48 une valeur de test de surtension, une valeur de test de sous-tension et une valeur de test de tension nominale comprise entre une tension minimale de référence Vₘᵢₙ et une tension maximale de référence Vₘₐₓ.

Le premier dispositif de contrôle 36 vérifie la fermeture du premier contacteur d'isolement 22 suite à l'envoi de la valeur de test de tension nominale, et émet un signal d'erreur lorsque le premier contacteur d'isolement 22 reste ouvert malgré l'envoi de la valeur de test de tension nominale.

Le dispositif de contrôle 36 vérifie l'ouverture du premier contacteur d'isolement 22 suite à l'envoi de la valeur de test de sous-tension ou de surtension et émet un signal d'erreur lorsque le premier contacteur d'isolement 22 reste fermé malgré l'envoi de la valeur de test de sous-tension ou de surtension.

Selon une variante du système 10, le module de contrôle 48 est également connecté au deuxième contacteur d'isolement 28 et est également configuré pour isoler la batterie 12 par rapport au réseau en coupant l'alimentation du deuxième contacteur d'isolement 28 lorsqu'une sous-tension inférieure à une tension minimale de référence Vₘᵢₙ prédéterminée est mesurée par le système de mesure externe 46 ou lorsqu'une surtension supérieure à une tension maximale de référence Vₘₐₓ prédéterminée est mesurée par le système de mesure externe 46.

Dans cette variante, le module de contrôle 48 isole également la batterie 12 par rapport au réseau en coupant l'alimentation du deuxième contacteur d'isolement 28 lorsqu'une sous-tension inférieure à une tension minimale de référence Vₘᵢₙ prédéterminée est mesurée par le système de mesure externe 46 ou lorsqu'une surtension supérieure à une tension maximale de référence Vₘₐₓ prédéterminée est mesurée par le système de mesure externe 46.

Selon encore une autre variante, plusieurs modules externes 30 sont associés à la batterie 12, chaque système de mesure externe 46 étant configuré pour mesurer la tension aux bornes de la batterie 12 et chaque module de contrôle 48 étant configuré pour isoler la batterie 12 lorsque le système de mesure externe 46 associé mesure une surtension ou une sous-tension.

Dans cette variante, chaque système de mesure externe 46 mesure la tension aux bornes de la batterie 12 et chaque module de contrôle 48 isole la batterie 12 lorsque le système de mesure externe 46 associé mesure une surtension ou une sous-tension.

Ainsi, le système 10 de protection fourni par l'invention permet sans ajout ou modification de logiciel de protection d'atteindre un faible taux d'occurrence des pannes notamment inférieur à 10⁻⁹ par heure. Le module externe 30 vient s'ajouter aux protections préexistantes de manière simple et assure un niveau de protection supplémentaire permettant d'atteindre ce taux. L'implémentation du module externe 30 au sein des protections de la batterie 12 présente, en outre, un coût faible.

## Revendications

1. Système (10) de protection d'une batterie (12) de véhicule destinée à stocker de l'énergie provenant d'un réseau via une voie de charge (C) ou à fournir de l'énergie au réseau via une voie de décharge (D),
le système (10) comprenant au moins un convertisseur (20) de courant, au moins un premier contacteur d'isolement (22) du convertisseur (20) disposé entre la voie de charge (C) ou/et la voie de décharge (D) et le convertisseur (20) en amont du convertisseur (20) et au moins un module externe (30) de protection de la batterie (12) indépendant du convertisseur (20), disposé en aval du convertisseur (20),
la batterie (12) étant reliée électriquement au convertisseur (20), le convertisseur (20) étant relié électriquement au réseau via la voie de charge (C) et la voie de décharge (D),
le premier contacteur d'isolement (22) étant propre à connecter ou à déconnecter le convertisseur (20) au réseau en amont du convertisseur (20) par rapport à la batterie (12), chaque module externe (30) de protection de la batterie (12) comprenant :
- un système de mesure externe (46) de la tension aux bornes de la batterie (12), et
- un module de contrôle (48) configuré pour recevoir la valeur de la tension mesurée par le système de mesure externe (46) et étant configuré pour isoler la batterie (12) par rapport au réseau lorsqu'une sous-tension inférieure à une tension minimale de référence prédéterminée est mesurée par le système de mesure externe (46) ou lorsqu'une surtension supérieure à une tension maximale de référence prédéterminée est mesurée par le système de mesure externe (46),
le module de contrôle (48) isolant la batterie (12) en ouvrant le premier contacteur d'isolement (22) du convertisseur (20) lorsqu'une surtension ou une sous-tension est mesurée par le système de mesure externe (46) de la tension,
**caractérisé en ce que** le convertisseur (20) comprend un premier système de mesure (34) de tension aux bornes de la batterie (12) et un premier dispositif de contrôle (36) propre à ouvrir le premier contacteur d'isolement (22) du convertisseur (20) lorsqu'une surtension ou une sous-tension est mesurée par le premier système de mesure (34).

2. Système (10) selon la revendication 1, dans lequel le premier contacteur d'isolement (22) du convertisseur (20) est propre à connecter ou à déconnecter le convertisseur (20) au réseau en autorisant ou en empêchant la circulation du courant respectivement dans la voie de charge (C) et/ou dans la voie de décharge (D) en amont du convertisseur (20) par rapport à la batterie (12).

3. Système (10) selon la revendication 2, dans lequel lorsque la tension mesurée par le système de mesure externe (46) est inférieure à la tension minimale de référence, le module de contrôle (48) commande le premier contacteur d'isolement (22) pour empêcher le courant de circuler dans la voie de décharge (D) et lorsque la tension mesurée par le système de mesure externe (46) est supérieure à la tension maximale de référence, le module de contrôle (48) commande le premier contacteur d'isolement (22) pour empêcher le courant de circuler dans la voie de charge (C).

4. Système (10) selon l'une quelconque des revendications 1 à 3, dans lequel le premier dispositif de contrôle (36) est propre à tester le module externe (30) en envoyant au module de contrôle (48) au moins une valeur de test de surtension ou de sous-tension ou une valeur de test de tension nominale comprise entre la tension minimale de référence et la tension maximale de référence.

5. Système (10) selon l'une quelconque des revendication 1 à 4, comprenant un module de gestion (26) de la batterie (12) et un deuxième contacteur d'isolement (28) de la batterie (12) propre à connecter la batterie (12) au convertisseur (20) ou à déconnecter la batterie (12) du convertisseur (20), le module de gestion (26) comprenant un deuxième système de mesure (40) de la tension aux bornes de la batterie (12), le module de gestion (26) de la batterie (12) étant configuré pour ouvrir le deuxième contacteur d'isolement (28) de la batterie (12) lorsqu'une surtension ou une sous-tension est mesurée par le deuxième système de mesure (40).

6. Système (10) selon la revendication 5, dans lequel le module de contrôle (48) est propre à ouvrir le deuxième contacteur d'isolement (28), lorsqu'une surtension ou une sous-tension est mesurée par le système de mesure externe (46).

7. Véhicule, notamment véhicule ferroviaire, véhicule routier ou de transport en commun, comprenant :
- au moins une batterie (12),
- au moins un système (10) selon l'une quelconque des revendications précédentes,
- au moins un réseau propre à raccorder la batterie (12) à des utilités via la voie de décharge (D) et la batterie (12) à un système (10) de recharge via la voie de charge (C).

8. Procédé de protection d'une batterie (12) de véhicule par un système (10) de protection selon l'une quelconque des revendications 1 à 6, comprenant les étapes suivantes :
- mesure de la tension aux bornes de la batterie (12) par le système de mesure externe (46) de la tension,
- réception par le module de contrôle (48) de la valeur de la tension mesurée par le système de mesure externe (46),
- ouverture du premier contacteur d'isolement (22) du convertisseur (20) par le module de contrôle (48) lorsque la valeur de la tension mesurée est inférieure à une tension minimale de référence prédéterminée ou lorsque la tension mesurée est supérieure à une tension maximale de référence prédéterminée.

9. Procédé selon la revendication 8, le premier dispositif de contrôle (36) étant propre à tester le module externe (30) en envoyant au module de contrôle (48) au moins une valeur de test de surtension ou de sous-tension ou une valeur de test de tension nominale comprise entre la tension minimale de référence et la tension maximale de référence, le premier dispositif de contrôle (36) du convertisseur (20) testant le module externe (30) périodiquement en :
- envoyant successivement au module de contrôle (48), une valeur de test de surtension, une valeur de test de sous-tension et une valeur de test de tension nominale comprise entre une tension minimale de référence et une tension maximale de référence,
- émettant un signal d'erreur lorsque le premier contacteur d'isolement (22) reste ouvert malgré l'envoi de la valeur de test de tension nominale,
- émettant un signal d'erreur lorsque le premier contacteur d'isolement (22) reste fermé malgré l'envoi de la valeur de test de sous-tension ou de surtension.

## Patentansprüche

1. System (10) zum Schutz einer Batterie (12) eines Fahrzeugs, die dazu bestimmt ist, über einen Ladepfad (C) Energie aus einem Netz zu speichern oder über einen Entladepfad (D) Energie an das Netz abzugeben,
das System (10) umfassend mindestens einen Umrichter (20) von Strom, mindestens ein erstes Trennschütz (22) des Umrichters (20), das zwischen dem Ladepfad (C) und/oder dem Entladepfad (D) und dem Umrichter (20) stromaufwärts von dem Umrichter (20) angeordnet ist, und mindestens ein externes Modul (30) zum Schutz der Batterie (12), das unabhängig von dem Umrichter (20) ist und stromabwärts von dem Umrichter (20) angeordnet ist,
wobei die Batterie (12) elektrisch mit dem Umrichter (20) verbunden ist, wobei der Umrichter (20) über den Ladepfad (C) und den Entladepfad (D) elektrisch mit dem Netz verbunden ist,
wobei das erste Trennschütz (22) geeignet ist, um den Umrichter (20) mit dem Netz stromaufwärts von dem Umrichter (20) in Bezug auf die Batterie (12) zu verbinden oder zu trennen, wobei jedes externe Modul (30) zum Schutz der Batterie (12) Folgendes umfasst:
- ein externes Messsystem (46) der Spannung an den Anschlüssen der Batterie (12), und
- ein Steuermodul (48), das konfiguriert ist, um den von dem externen Messsystem (46) gemessenen Spannungswert zu empfangen, und das konfiguriert ist, um die Batterie (12) von dem Netz zu trennen, wenn eine Unterspannung unterhalb einer minimalen Referenzspannung durch das externe Messsystem (46) gemessen wird oder wenn eine Überspannung, die größer ist als eine vorbestimmte maximale Referenzspannung, durch das externe Messsystem (46) gemessen wird,
das Steuermodul (48) die Batterie (12) durch Öffnen des ersten Trennschützes (22) des Umrichters (20) isoliert, wenn von dem externen Spannungsmesssystem (46) eine Überspannung oder eine Unterspannung gemessen wird,
**dadurch gekennzeichnet, dass** der Umrichter (20) ein erstes Messsystem (34) für Spannung an den Anschlüssen der Batterie (12) und eine erste Steuervorrichtung (36) umfasst, die geeignet ist, um das erste Trennschütz (22) des Umrichters (20) zu öffnen, wenn eine Überspannung oder eine Unterspannung durch das erste Messsystem (34) gemessen wird.

2. System (10) nach Anspruch 1, wobei das erste Trennschütz (22) des Umrichters (20) geeignet ist, um den Umrichter (20) mit dem Netz zu verbinden oder davon zu trennen, indem es den Stromfluss jeweils in dem Ladepfad (C) und/oder im Entladepfad (D) stromaufwärts des Umrichters (20) in Bezug auf die Batterie (12) zulässt oder verhindert.

3. System (10) nach Anspruch 2, wobei, wenn die von dem externen Messsystem (46) gemessene Spannung niedriger ist als die minimale Referenzspannung, das Steuermodul (48) das erste Trennschütz (22) steuert, um zu verhindern, dass Strom in den Entladepfad (D) fließt, und wenn die von dem externen Messsystem (46) gemessene Spannung größer ist als die maximale Referenzspannung ist, das Steuermodul (48) das erste Trennschütz (22) steuert, um zu verhindern, dass Strom in den Ladepfad ^{©} fließt.

4. System (10) nach einem der Ansprüche 1 bis 3, wobei die erste Steuervorrichtung (36) geeignet ist, um das externe Modul (30) zu testen, indem sie mindestens einen Überspannungs- oder Unterspannungs-Testwert oder einen Nennspannungs-Testwert, der zwischen der minimalen Referenzspannung und der maximalen Referenzspannung liegt, an das Steuermodul (48) sendet.

5. System (10) nach einem der Ansprüche 1 bis 4, umfassend ein Managementmodul (26) der Batterie (12) und ein zweites Trennschütze (28) der Batterie (12), der geeignet ist, um die Batterie (12) mit dem Umrichter (20) zu verbinden oder die Batterie (12) von dem Umrichter (20) zu trennen, das Managementmodul (26) umfassend ein zweites Messsystem (40) der Spannung an den Anschlüssen der Batterie (12), wobei das Managementmodul (26) der Batterie (12) konfiguriert ist, um das zweite Trennschütz (28) der Batterie (12) zu öffnen, wenn durch das zweite Messsystem (40) eine Überspannung oder eine Unterspannung gemessen wird.

6. System (10) nach Anspruch 5, wobei das Steuermodul (48) geeignet ist, um das zweite Trennschütz (28) zu öffnen, wenn durch das externe Messsystem (46) eine Überspannung oder eine Unterspannung gemessen wird.

7. Fahrzeug, insbesondere Schienenfahrzeug, Straßenfahrzeug oder Fahrzeug des öffentlichen Verkehrs, umfassend:
- mindestens eine Batterie (12),
- mindestens ein System (10) nach einem der vorherigen Ansprüche,
- mindestens ein Netzwerk, das geeignet ist, um die Batterie (12) über den Entladepfad (D) mit Verbrauchern und die Batterie (12) über den Ladepf^{©}(C) mit einem Ladesystem (10) zu verbinden.

8. Verfahren zum Schutz einer Batterie (12) eines Fahrzeugs durch ein Schutzsystem (10) nach einem der Ansprüche 1 bis 6, umfassend die folgenden Schritte:
- Messen der Spannung an den Anschlüssen der Batterie (12) durch das externe Spannungsmesssystem (46),
- Empfangen des von dem externen Messsystem (46) gemessenen Spannungswerts durch das Steuermodul (48),
- Öffnen des ersten Trennschützes (22) des Umrichters (20) durch das Steuermodul (48), wenn der Wert der gemessenen Spannung unterhalb einer vorbestimmten minimalen Referenzspannung ist, oder wenn die gemessene Spannung größer ist als eine vorbestimmte maximale Referenzspannung.

9. Verfahren nach Anspruch 8, wobei die erste Steuervorrichtung (36) geeignet ist, um das externe Modul (30) zu testen, indem sie mindestens einen Überspannungs- oder Unterspannungs-Testwert oder einen Nennspannungs-Testwert, der zwischen der minimalen Referenzspannung und der maximalen Referenzspannung ist, an das Steuermodul (48) sendet, wobei die erste Steuervorrichtung (36) des Umrichters (20) das externe Modul (30) durch Folgendes regelmäßig testet:
- aufeinanderfolgend Senden eines Überspannungs-Testwerts eines Unterspannungs-Testwerts und eines Nennspannungs-Testwerts der zwischen einer minimalen Referenzspannung und einer maximalen Referenzspannung liegt, an das Steuermodul (48),
- Ausgeben eines Fehlersignals, wenn das erste Trennschütz (22) trotz des Sendens des Nennspannungs-Testwerts offen bleibt,
- Ausgeben eines Fehlersignals, wenn das erste Trennschütz (22) geschlossen bleibt, obwohl der Unterspannungs- oder Überspannungstestwert gesendet wurde.

## Claims

1. A system (10) for protecting a vehicle battery (12) intended to store energy from a network via a charge path (C) or to supply energy to the network via a discharge path (D),
the system (10) comprising at least one current converter (20), at least one first isolation switch (22) of the converter (20) arranged between the charge path (C) and/or the discharge path (D) and the converter (20) upstream of the converter (20) and at least one external module (30) for protecting the battery (12) independent of the converter (20), arranged downstream of the converter (20),
the battery (12) being electrically connected to the converter (20), the converter (20) being electrically connected to the mains via the charge path (C) and the discharge path (D), the first isolation switch (22) being suitable for connecting or disconnecting the converter (20) to the mains upstream of the converter (20) with respect to the battery (12), each external module (30) for protecting the battery (12) comprising:
- an external system (46) for measuring the voltage at the terminals of the battery (12), and
- a control module (48) configured to receive the value of the voltage measured by the external measurement system (46) and being configured to isolate the battery (12) from the mains when an undervoltage lower than a predetermined minimum reference voltage is measured by the external measurement system (46) or when an overvoltage higher than a predetermined maximum reference voltage is measured by the external measurement system (46),
the control module (48) isolating the battery (12) by opening the first isolation switch (22) of the converter (20) when an overvoltage or undervoltage is measured by the external voltage measurement system (46),
**characterised in that** the converter (20) comprises a first system (34) for measuring the voltage at the terminals of the battery (12) and a first control device (36) capable of opening the first isolation switch (22) of the converter (20) when an overvoltage or undervoltage is measured by the first measuring system (34).

2. The system (10) according to claim 1, in which the first isolation switch (22) of the converter (20) is suitable for connecting or disconnecting the converter (20) to the mains by authorising or preventing the flow of current respectively in the charge path (C) and/or in the discharge path (D) upstream of the converter (20) with respect to the battery (12).

3. The system (10) according to claim 2, wherein when the voltage measured by the external measurement system (46) is less than the minimum reference voltage, the control module (48) operates the first isolation switch (22) to prevent current from flowing in the discharge path (D), and when the voltage measured by the external measurement system (46) is greater than the maximum reference voltage, the control module (48) operates the first isolation switch (22) to prevent current from flowing in the charge path (C).

4. The system (10) according to any one of claims 1 to 3, in which the first control device (36) is suitable for testing the external module (30) by sending to the control module (48) at least one overvoltage or undervoltage test value or a rated voltage test value lying between the minimum reference voltage and the maximum reference voltage.

5. The system (10) according to any one of claims 1 to 4, comprising a management module (26) for managing the battery (12) and a second isolation switch (28) of the battery (12) suitable for connecting the battery (12) to the converter (20) or disconnecting the battery (12) from the converter (20), the management module (26) comprising a second system (40) for measuring the voltage at the terminals of the battery (12), the management module (26) of the battery (12) being configured to open the second isolation switch (28) of the battery (12) when an overvoltage or undervoltage is measured by the second measuring system (40).

6. The system (10) according to claim 5, in which the control module (48) is adapted to open the second isolation switch (28) when an overvoltage or undervoltage is measured by the external measurement system (46).

7. A vehicle, in particular a railway vehicle, road vehicle or public transport vehicle, comprising:
- at least one battery (12),
- at least one system (10) according to any of the preceding claims,
- at least one network for connecting the battery (12) to utilities via the discharge path (D) and the battery (12) to a recharging system (10) via the charge path (C).

8. A method of protecting a vehicle battery (12) by a protection system according to any of claims 1 to 6, comprising the following steps:
- measurement, by the external voltage measurement system (46), of the voltage at the terminals of the battery (12),
- reception, by the control module (48), of the voltage value measured by the external measurement system (46),
- opening of the first isolation switch (22) of the converter (20) by the control module (48) when the value of the measured voltage is less than a predetermined minimum reference voltage or when the measured voltage is greater than a predetermined maximum reference voltage.

9. The method according to claim 8, the first control device (36) being suitable for testing the external module (30) by sending to the control module (48) at least one overvoltage or undervoltage test value or a rated voltage test value between the minimum reference voltage and the maximum reference voltage, the first control device (36) of the converter (20) testing the external module (30) periodically by:
- successively sending to the control module (48) an overvoltage test value, an undervoltage test value and a rated voltage test value between a minimum reference voltage and a maximum reference voltage,
- emitting an error signal when the first isolation switch (22) remains open despite sending the rated voltage test value,
- emitting an error signal when the first isolation switch (22) remains closed despite sending the undervoltage or overvoltage test value.
